# EUROPEAN PATENT APPLICATION

(11) **EP 4 681 859 A1**
(43) Date of publication of application: **21.01.2026**
(21) Application number: 23927641.3
(22) Date of filing: 25.12.2023
(51) Int. Cl.: B23K 13/08, B23K 13/00

(54) **IMPEDER SHEET, MANDREL OF ELECTRIC RESISTANCE WELDED PIPE MANUFACTURING DEVICE, AND METHOD OF MANUFACTURING ELECTRIC RESISTANCE WELDED PIPE**

(30) Priority: 16.03.2023 JP 2023042009
(71) Applicant: NIPPON STEEL CORPORATION, Chiyoda-ku Tokyo 100-8071 (JP)
(72) Inventor: HIROTA, Yoshiaki, Tokyo 100-8071 (JP)
(74) Representative: Vossius & Partner Patentanwälte Rechtsanwälte mbB
(86) International application number: PCT/JP2023/046525
(87) International publication number: WO 2024/190039

(57) **Abstract**

An object of the present invention is to easily increase efficiency of electric-resistance welding at a low cost without modification or new fabrication of a mandrel, impeders and an impeder case that make up a conventional inner circumferential current suppression device.

An impedance sheet of the present invention has a sheet that can be freely wound around an outer circumference of a mandrel of an electric-resistance welded pipe manufacturing device, and a plurality of ferromagnetic materials that exhibit insulating properties, which are disposed on the sheet.

## Description

### [Technical Field]

The present invention relates to an impedance sheet, a mandrel of an electric-resistance welded pipe manufacturing device, and a method for manufacturing the electric-resistance welded pipe.

### [Background Art]

In general, methods for manufacturing a metal pipe include, for example, a method for manufacturing an electric-resistance welded pipe, a spiral pipe, or other pipes by welding a metal band plate into a tubular shape while bending it, a method for manufacturing a seamless pipe by directly drilling a metal billet and a method for manufacturing a pipe by extrusion.

Electric-resistance welded pipes are manufactured in large quantities because they are particularly productive and inexpensive. In the manufacturing of such electric-resistance welded pipes, a metal band plate is continuously roll-formed by multiple forming rolls to gradually form a cylindrical shape while the metal band plate is running, and finally, butt welding is performed at a point where both end portions of the metal band plate meet in a width direction. During the butt welding, it is general that a high-frequency current is passed through the metal band plate to raise the metal band plate to a melting temperature at the both end portions in the width direction, and both end surfaces are then pressure-welded with squeeze rolls to form into a tube.

Several methods for supplying current to both end portions in the width direction of the metal band plate to be joined have already been disclosed.

Patent Document 1 discloses the following methods: a method of generating an induced current directly in a metal by winding an induction coil around an outside of the metal and passing a primary current through the induction coil; and a method of pressing metal electrodes against each of both end portions of an open metal band plate before it is formed into a closed section in the forming process and passing current directly from a power supply.

When supplying current to both end portions in the width direction of the metal band plate to be joined, a high-frequency current of about 100 kHz to 400 kHz is generally used to pass through the induction coil or electrodes. A ferromagnetic core such as soft ferrite or other ferromagnetic materials is often disposed on an inner surface side of the pipe as an impeder.

As described below, the current, which tends to flow around an inner circumference of the metal band plate (hereinafter referred to as "inner circumferential current") that has been bent into the cylindrical shape (also referred to as "open pipe") out of the current supplied to the both end portions in the width direction, is a current that does not contribute to welding. Therefore, the above-mentioned impeders are used as a device to suppress the inner circumferential current of the metal band plate that has been bent into the cylindrical shape (hereinafter also referred to as "inner circumferential current suppression device").

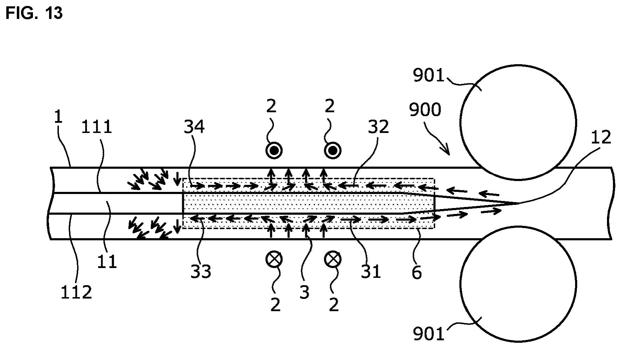

Hereinafter, the method of supplying current to the both end portions in the width direction of the metal band plate to be joined and a conventional inner circumferential current suppression device used are described in detail using FIG. 13 to FIG. 16.

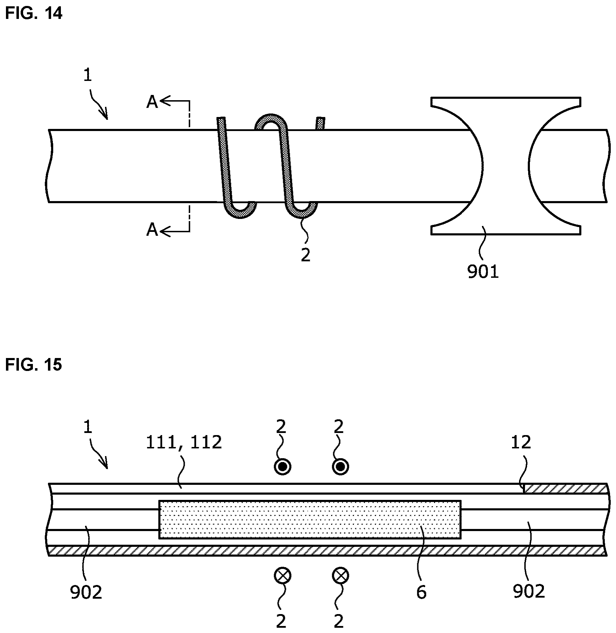

FIG. 13 is a plan view illustrating an appearance of a main part when an electric-resistance welded pipe is manufactured using an electric-resistance welded pipe manufacturing device 900 with an induction coil 2. FIG. 14 is a side view of the appearance when the electric-resistance welded pipe is manufactured using the electric-resistance welded pipe manufacturing device 900 illustrated in FIG. 13.

As schematically illustrated in FIG. 13 and FIG. 14, the electric-resistance welded pipe manufacturing device 900 is largely formed by the induction coil 2, an impeder as a conventional inner circumferential current suppression device 6, squeeze rolls 901 that apply pressure from a side surface of an open pipe 1, and a not-illustrated head roll that presses a joint portion from diagonally above the pipe. In FIG. 13 and FIG. 14, a code 1 is an open pipe, a code 11 is an open pipe opening, a code 111 is an open pipe opening end portion, a code 112 is an open pipe opening end portion, a code 12 is a joint portion, a code 3 is an induced current, a code 31 is a downstream-side induced current, a code 32 is a downstream-side induced current, a code 33 is an upstream-side induced current, and a code 34 is an upstream-side induced current. Here, the induced currents 31 to 34 are illustrated as if they were flowing on a top surface of the pipe for convenience, including currents flowing on an end surface of the open pipe 1, which are not illustrated in the figure.

The induction coil 2 is wound around an outer circumference of the open pipe 1, which is a metal band plate formed into a cylindrical shape. By passing a primary current through the induction coil 2, the induced current 3 is generated in the open pipe 1. An electric-resistance welded pipe is manufactured by such induced current.

Here, it is assumed that the open pipe 1, the cylindrically formed metal band plate, is running from a left side to a right side in the figure. Hereafter, a lower side in the running direction is referred to as "downstream" and an upper side opposite the running direction is referred to as "upstream".

The electric-resistance welded pipe is manufactured according to the following procedure.
1) The running open pipe 1, which has been slit to a width matching a diameter to be formed, is formed into a cylindrical shape while being bent by a plurality of forming rolls, and the open pipe opening end portions 111, 112 are made to face each other.
2) The induced current generated by the induction coil 2 in the cylindrically formed open pipe 1 heats and melts the open pipe opening end portions 111, 112.
3) The facing open pipe opening end portions 111, 112 of the open pipe 1 are butted together on a downstream side of the induction coil 2 and they are pressed against each other with the squeeze roll 901 to make them adhere closely to be joined (welded). At this time, the head roll (not illustrated) that presses the joint portion 12 from diagonally above is often used.

A major part of the current flowing through the facing open pipe opening end portions 111, 112 of the open pipe 1 flows through the ends facing each other. In FIG. 13, for simplicity of explanation and for convenience, the current is illustrated as flowing through a top surface side of the facing open pipe opening end portions 111, 112 of the open pipe 1.

The open pipe 1, a material to be welded, is bent by a plurality of not-illustrated forming rolls from a flat plate state while running to form the open pipe opening end portions 111, 112 facing each other. The open pipe opening end portions 111, 112 of the bent open pipe 1 are finally pressed by the squeeze roll 901, and the open pipe opening end portions 111, 112 are brought into contact with each other at the joint portion 12.

The induction coil 2 is provided on an upstream side of the squeeze roll 901, to melt and join the open pipe opening end portions 111, 112 facing each other. By passing a high-frequency current through the induction coil 2, the induced current 3 is generated on a surface of the cylindrically bent open pipe 1 directly below the induction coil 2.

The induced current 3 circulates around an outer circumference of the open pipe 1 along the induction coil 2 that circulates around the open pipe 1. Here, since the open pipe opening end portions 111, 112 of the open pipe 1 are opened as openings, the circulating induced current 3 cannot flow directly below the induction coil 2 in this open area. Therefore, the induced current 3 can be divided into the currents 31, 32 flowing to the joint portion 12 side and the currents 33, 34 flowing upstream of the induction coil 2, and also into the inner circumferential current tending to flow around the inner circumference of the open pipe 1.

The inner circumferential current is a current that tends to flow on the inner circumferential side opposite to the current that is generated in the outer circumference of the open pipe 1 directly below the induction coil 2. When no measures are taken against the inner circumferential current, the amount of current going to the joint portion 12 is reduced and the amount of current that becomes such an inner circumferential current is increased, resulting in a significant decrease in welding efficiency.

A method of suppressing the inner circumferential current as described above will now be explained with reference to FIG. 15. FIG. 15 is a view schematically illustrating a cross-sectional side view of the view illustrated in FIG. 13 when cut from a side of the electric-resistance welded pipe manufacturing device 900.

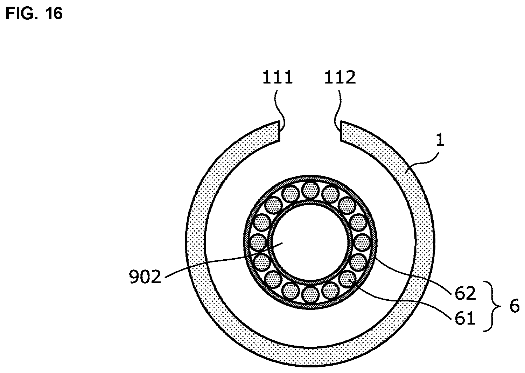

As illustrated in the cross-sectional side view of FIG. 15, the conventional inner circumferential current suppression device 6 is disposed inside the cylindrically formed metal band plate 1. As will be explained again below with reference to FIG. 16, such an inner circumferential current suppression device 6 is formed by impeders 61 each made of a ferromagnetic material such as soft ferrite or electromagnetic steel, which is housed in an inner space of an impeder case 62.

By disposing the inner circumferential current suppression device 6 inside the cylindrically formed open pipe 1, a magnetic field is generated by electromagnetic induction that suppresses the flow of the inner circumferential current when the inner circumferential current tends to flow. This increases reactance inside the open pipe 1 and suppresses the inner circumferential current.

However, this inner circumferential current suppression is possible only under the condition that the installed impeders 61 are not saturated with magnetic flux. When the impeders 61 become saturated with magnetic flux, they lose their magnetism and cease to function as impeders. As a result, the inner circumferential current increases and welding efficiency is greatly reduced. A possible cause of the magnetic flux saturation is an increase in intensity of the magnetic field generated by the current flowing in the induction coil 2. When the current flowing through the induction coil 2 increases due to an increase in a line speed of an electric-resistance welded pipe manufacturing line, a larger steel pipe diameter, a thicker plate thickness, or other reasons, the magnetic flux saturation of the impeders 61 becomes more pronounced.

An example of the conventional inner circumferential current suppression device 6 is described using FIG. 16. FIG. 16 illustrates an example of a cross-section obtained when the conventional inner circumferential current suppression device 6 with the impeders 61 disposed around a mandrel 902 is cut by an A-A cutting line in FIG. 14.

In FIG. 16, each impeder 61 is bar-shaped and is often used in the electric-resistance welded pipe manufacturing device 900 with the mandrel 902 of relatively large diameter. In this example, the bar-shaped impeders 61 are attached to the impeder case 62 in a circumferential direction, and a lid is placed on the impeder case 62 to allow cooling water to flow through an inside of the impeder case 62.

The conventional inner circumferential current suppression device 6 is used to suppress the induced current 3 generated by the induction coil 2 on the open pipe 1 that has been bent into the cylindrical shape to flow through an inner surface of the pipe, and more current flows over the open pipe opening end portions 111, 112 of the open pipe 1, to increase welding efficiency. Such a conventional inner circumferential current suppression device 6 also has an effect of suppressing formation of a closed circuit around the inner circumference of the pipe due to the induced current flowing upstream of the induction coil 2, a large proportion of which is reactive current that does not contribute to welding, and increasing the induced current toward the joint portion 12 side.

The conventional inner circumferential current suppression device 6 described in FIG. 16 generally has a structure that cools through a cooling medium consisting mainly of water.

The conventional inner circumferential current suppression device 6 is usually mounted on the mandrel 902 for grinding a bead of the pipe inner surface joint portion 12 illustrated in FIG. 15 and is installed from directly below the induction coil 2 to in front of and behind the induction coil 2.

The mandrels 902 are usually prepared in a plurality of numbers according to an inner diameter of the pipe to be manufactured. To match such mandrels 902, a plurality of impeders 61 and impeder cases 62, which make up the conventional inner circumferential current suppression device 6, are also usually prepared.

Therefore, when the impeder 61 making up the conventional inner circumferential current suppression device 6 is insufficient in terms of the inner circumferential current suppression efficiency, as in cases when productivity is to be improved by increasing heating efficiency and when a metal pipe of a size that cannot be produced due to bottlenecks in heating is produced, it is necessary to increase capacity of the impeder 61 by extending its length, increasing its cross-sectional area, and the like to increase the welding efficiency. In such cases, the mandrels 902 and the impeders 61 and impeder cases 62 that make up the conventional inner circumferential current suppression device 6 themselves must be modified, or a new impeder 61 and impeder case 62 must be fabricated. In practice, however, the cost for such modification or fabrication is significant, and it is often difficult to achieve in terms of cost-effectiveness.

### [Prior Art Document]

### [Patent Document]

Patent Document 1: Japanese Laid-open Patent Publication No. S53-44449

### [Non-Patent Document]

Non-Patent Document 1: "The Basics and Applications of High Frequency - Key Technologies Supporting Our Age" Supervised by Kanjiro Takahashi, Tokyo Denki University Press, 1990, p. 79, 80

### [Disclosure of the Invention]

### [Problems to Be Solved by the Invention]

The present invention was made in view of the above problems, and an object thereof is to provide an impedance sheet, a mandrel of an electric-resistance welded pipe manufacturing device, and a method for manufacturing the electric-resistance welded pipe, which enable to increase efficiency of electric-resistance welding easily and at a low cost without modification or new fabrication of mandrels, impeders and impeder cases that make up the conventional inner circumferential current suppression device.

### [Means for Solving the Problems]

To solve the above problem, the inventors have diligently studied a method of configuring an inner circumferential current suppression device that improves heating efficiency during manufacturing of an electric-resistance welded pipe by considering a disposed position, shape, mounting convenience, and maintainability of a ferromagnetic material that is an impeder making up the inner circumferential current suppression device.

As a result, the inventors have found that an impedance sheet with ferromagnetic materials disposed against a sheet that has durability and heat resistance and can be freely wound around an outer circumference of a mandrel of the electric-resistance welded pipe manufacturing device is extremely effective in configuring an easy and cost-effective inner circumferential current suppression device.

Furthermore, it was considered that the conventional inner circumferential current suppression device required the impeder to be cooled after the impeder was housed in the impeder case. However, as described below, the inventors have found that the conventional inner circumferential current suppression device may not necessarily require the impeder to be cooled after the impeder is housed in the impeder case.

The present invention is based on these findings and is summarized as follows.

(1) An impedance sheet including a sheet that can be freely wound around an outer circumference of a mandrel of an electric-resistance welded pipe manufacturing device, and a plurality of ferromagnetic materials that exhibit insulating properties disposed on the sheet.
(2) The impedance sheet according to (1), wherein the sheet is made of an insulator having heat resistance and does not cause dielectric loss due to high-frequency current.
(3) The impedance sheet according to (1), wherein a surface of the sheet is provided with a bag-shaped holder that can house the ferromagnetic material in bar shape or powder form, and the ferromagnetic material is provided in the bag-shaped holder.
(4) The impedance sheet according to any one of (1) to (3), wherein a ferromagnetic core formed by plate-shaped ferromagnetic materials stacked and integrated together is used as the plurality of ferromagnetic materials, and the ferromagnetic core is disposed on the sheet so that a stacking direction of the plate-shaped ferromagnetic materials is orthogonal to a surface normal direction of the sheet.
(5) The impedance sheet according to any one of (1) to (3), wherein sintered bodies of magnetic materials that exhibit ferromagnetism are used as the plurality of ferromagnetic materials.
(6) The impedance sheet according to any one of (1) to (5), wherein the sheet has coupling tools at an end of the sheet and a plurality of the sheets can be coupled with each other.
(7) A mandrel of an electric-resistance welded pipe manufacturing device, including the impedance sheet according to any one of (1) to (6) wound around to cover at least half or more of an outer circumference of the mandrel of the electric-resistance welded pipe manufacturing device.
(8) A method for manufacturing an electric-resistance welded pipe, which is a method using an electric-resistance welded pipe manufacturing device made up of an induction coil, squeeze rolls, and a mandrel, to perform electric-resistance welding of a metal band plate that is bent into a cylindrical shape, the method including: winding the impedance sheet according to any one of (1) to (6) around to cover at least half or more of an outer circumference of the mandrel.
(9) The method for manufacturing the electric-resistance welded pipe according to (8), wherein the impedance sheet is wound around to cover at least a portion of the mandrel that is located upstream of the induction coil in the running direction.

### [Effect of the Invention]

As explained above, the present invention allows an inner circumferential current suppression function to be freely added later on to an existing mandrel as needed, without modifying or newly fabricating mandrels, impeders and impeder cases that make up a conventional inner circumferential current suppression device. This has a remarkable effect of making it possible to easily install additional impeders of a required length and thickness when inner circumferential current suppression capability needs to be enhanced from an initial design due to changes in production conditions, or other cases.

In addition, by enhancing the inner circumferential current suppression capability, remarkable effects can be obtained in reducing electricity consumption, increasing production rate, and enabling production of electric-resistance welded pipes with sizes that could not be produced due to bottlenecks in electricity, or other reasons.

Furthermore, the impedance sheet of this invention does not use a conventional impeder case. Therefore, it is easy to check and replace damaged impeders without disassembling the impeder case, which has an advantage of requiring minimal maintenance. This significantly reduces maintenance costs and time. Thus, industrial benefits of this invention are extremely large.

According to the present invention, welding efficiency is improved due to the improved impeder capability, thus reducing the amount of electricity used and enabling energy saving. In addition, when the same electricity as before is applied, productivity can also be improved because the line speed can be increased due to the improved welding efficiency by the present invention. Furthermore, the industrial effect is extremely large, as it enables the manufacture of electric-resistance welded pipes with sizes and types that have been difficult to manufacture in the past due to power supply capacity limitations, or other reasons.

### [Brief Description of the Drawings]

[FIG. 1] FIG. 1 is a view to explain an impedance sheet according to a first embodiment of the present invention.
[FIG. 2A] FIG. 2A is a view to explain the impedance sheet according to the first embodiment.
[FIG. 2B] FIG. 2B is a view to explain the impedance sheet according to the first embodiment.
[FIG. 3] FIG. 3 is a view to explain an example where a plurality of impedance sheets according to the first embodiment are coupled.
[FIG. 4] FIG. 4 is a plan view to explain an impedance sheet according to a second embodiment of the present invention.
[FIG. 5] FIG. 5 is a side view to explain the impedance sheet illustrated in FIG. 4.
[FIG. 6] FIG. 6 is a plan view to explain an impedance sheet according to a third embodiment of the present invention.
[FIG. 7] FIG. 7 is a side view to explain the impedance sheet illustrated in FIG. 6.
[FIG. 8] FIG. 8 is a view to explain an example of a mandrel of an electric-resistance welded pipe manufacturing device using the impedance sheet according to the first embodiment of the present invention as an inner circumferential current suppression device.
[FIG. 9] FIG. 9 is a view to explain an example where the inner circumferential current suppression device of the present invention is added upstream of an existing inner circumferential current suppression device.
[FIG. 10] FIG. 10 is a view to explain an example of the inner circumferential current suppression device of the present invention where the inner circumferential current suppression devices of the present invention are overlapped in a radial direction.
[FIG. 11] FIG. 11 is a view to explain an example of the inner circumferential current suppression device of the present invention where the inner circumferential current suppression devices of the present invention are superimposed in a radial direction.
[FIG. 12A] FIG. 12A is an explanatory view schematically illustrating a ferromagnetic core used in Example 4.
[FIG. 12B] FIG. 12B is an explanatory view schematically illustrating a ferromagnetic core used in Comparative Example 2.
[FIG. 13] FIG. 13 is a plan view illustrating an appearance when an electric-resistance welded pipe is manufactured using an electric-resistance welded pipe manufacturing device having an induction coil.
[FIG. 14] FIG. 14 is a side view illustrating an appearance when the electric-resistance welded pipe is manufactured using the electric-resistance welded pipe manufacturing device illustrated in FIG. 13.
[FIG. 15] FIG. 15 is a cross-sectional side view illustrating an appearance when the electric-resistance welded pipe is manufactured using the electric-resistance welded pipe manufacturing device illustrated in FIG. 13.
[FIG. 16] FIG. 16 is a view to explain an example of a conventional inner circumferential current suppression device where impeders are disposed around a mandrel by using an A-A cross-sectional schematic view of FIG. 14.

### [Embodiments for Carrying out the Invention]

Hereinafter, preferred embodiments of the present invention are explained in detail with reference to the accompanying drawings. In this specification and the drawings, components that have substantially the same functional configuration will be omitted from duplicated explanations by applying the same codes.

### (First Embodiment)

An impedance sheet according to a first embodiment of the present invention is an impedance sheet that has a sheet that can be freely wound around an outer circumference of a mandrel of an electric-resistance welded pipe manufacturing device and a plurality of ferromagnetic materials that exhibit insulating properties disposed on the sheet. Such an impedance sheet can be used in a method for manufacturing the electric-resistance welded pipe, in which, for example, a metal band plate of various types of steel or stainless steel is bent into a cylindrical shape while running, and a tubular shape is achieved by welding.

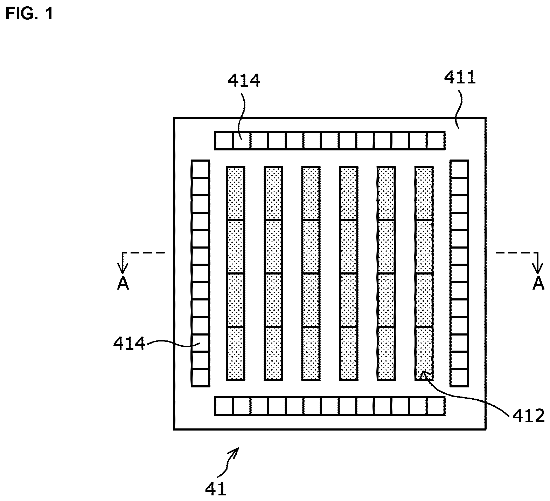

FIG. 1 is a plan view to explain an impedance sheet 41 according to the first embodiment of the present invention.

In FIG. 1, a code 41 is an impedance sheet, a code 411 is a sheet, a code 412 is a ferromagnetic material, and a code 414 is a sheet coupling tool. The impedance sheet 41 for manufacturing an electric-resistance welded pipe according to this embodiment is formed by the sheet 411 with the ferromagnetic materials 412 laid directly at a predetermined density and closely adhered.

The sheet 411 of this embodiment is supplied for manufacturing the electric-resistance welded pipe by covering, for example, at least half or more of an outer circumference of a mandrel 902 of the electric-resistance welded pipe manufacturing device, which is used for manufacturing the electric-resistance welded pipes, while closely adhering thereto, thereby forming an inner circumferential current suppression device 4. Therefore, it is desirable that the sheet 411 be durable and heat resistant, not to mention flexible enough to be freely wound around the outer circumference of the mandrel 902.

More precisely, the sheet 411 of this embodiment is generally made of an insulator that has heat resistance and does not cause dielectric loss due to high-frequency current. When the sheet 411 is made of a material that does not have heat resistance, the sheet itself may be damaged by heat generated during the manufacturing of the electric-resistance welded pipe. When the sheet 411 is not made of the insulator, a magnetic flux generated by passing an electric current through the induction coil 2 may cause an induced current to flow through the sheet itself, making it impossible to exhibit its function as an impeder. In addition, even if the sheet is made of the insulator, a material that generates the dielectric loss due to the high-frequency current may not only cause a decrease in efficiency but may also make it impossible to maintain its shape as a sheet.

In this specification, "heat resistant" means, for example, that a heat-resistant temperature is 150°C or higher. An upper limit of such heat-resistant temperature is not specified, and the higher, the better, and should be determined in consideration of a manufacturing cost, processability, life span, and the like of the impedance sheet. In this specification, "insulator" means, for example, a material with a resistivity of 1 × 10³ Ω·m or higher.

Materials for the sheet 411 include, for example, rubber such as fluorine rubber and silicon rubber, various epoxy resins such as bakelite and glass epoxy, sheets made of silica, welding spatter sheets, and materials coated with heat-resistant paint, or other materials.

A state of the sheet 411 of this embodiment is not specified as long as the sheet 411 is configured to be freely wound around the outer circumference of the mandrel 902.

For example, the sheet 411 of this embodiment may be made of a material that can be freely bent (for example, the various rubbers described above, or other materials) and integrated into a sheet state.

The sheet 411 of this embodiment may be made of a material, for example, that is not relatively easy to bend (for example, bakelite, glass epoxy described above, or other materials), and configured so that it can be freely bent without being damaged. For example, the material that is not relatively easy to bend may be cut into strips, and the material of such strips may be joined together using heat-resistant coupling members to form a blind shape.

In the impedance sheet 41 of this embodiment, a plurality of ferromagnetic materials 412 exhibiting insulating properties are disposed on a surface of the above sheet 411.

In this specification, "ferromagnetic material" means a substance whose initial permeability (µi) is 1000 or higher. In addition, the ferromagnetic material "exhibiting insulating properties" means that "even in a substance itself or in a mass, eddy currents are difficult to be generated when exposed to a high-frequency magnetic field" and that its conductivity is 1 × 10⁶ S/m or higher.

Materials that can be used as such a ferromagnetic material 412 in the impedance sheet 41 of this embodiment include, for example, soft ferrite, electromagnetic steel, amorphous alloys, or other materials, that satisfy the initial permeability (µi) as described above.

In this embodiment, an overall shape of the individual ferromagnetic material 412 is not particularly regulated and may be various shapes, for example, such as bar-shaped, plate-shaped, or other shapes. A size of the individual ferromagnetic material 412 is also not particularly specified. In this embodiment, the individual ferromagnetic material 412 may be a ferromagnetic core formed by a stack of plate-shaped ferromagnetic materials, or it may be a sintered body of a magnetic material exhibiting ferromagnetism.

The number of ferromagnetic materials 412 on the sheet 411 should be adjusted according to a diameter of the electric-resistance welded pipe to be manufactured or a diameter of the mandrel 902 to ensure a required cross-sectional area of the ferromagnetic material.

These ferromagnetic materials 412, or other materials can be closely adhered to the deformable sheet 411 as described above by, for example, bonding them with an adhesive or housing them in a resin storage space in advance.

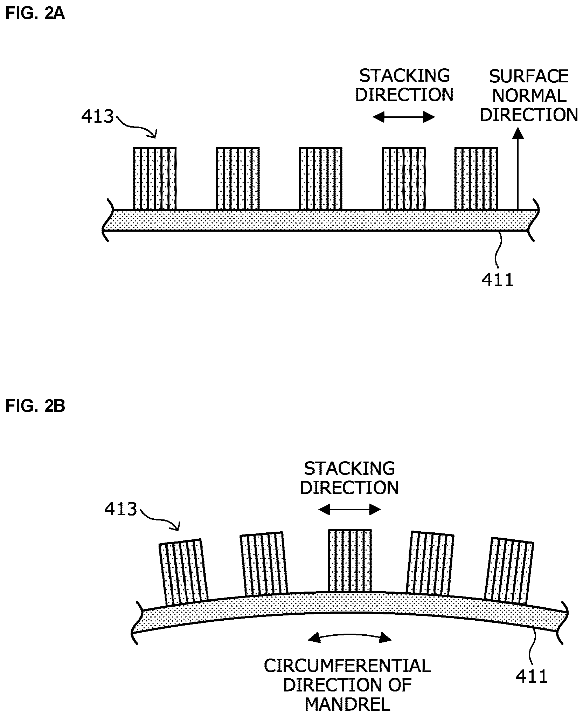

In the following, an example of the ferromagnetic materials 412 in a more preferred state in this embodiment will be explained with reference to FIG. 2A and FIG. 2B. FIG. 2A is a schematic view enlargedly illustrating a part of a cross-section of the impedance sheet illustrated in FIG. 1 when cut at an A-A cut line in FIG. 1.

In the impedance sheet 41 of this embodiment, ferromagnetic cores 413 may be used as the ferromagnetic materials 412, for example, in which a plurality of thin-plated ferromagnetic materials are stacked and integrated as schematically illustrated in FIG. 2A. Each of such ferromagnetic cores 413 is preferably disposed on the sheet 411 so that a stacking direction of the thin-plated ferromagnetic materials is orthogonal to a surface normal direction of the sheet 411, as schematically illustrated in FIG. 2A.

The ferromagnetic core 413, in which thin-plated ferromagnetic materials are stacked and integrated, disposed as described above can prevent the generation of eddy currents due to magnetic flux even if magnetic flux enters the ferromagnetic core 413, and the function of the impedance sheet 41 of this embodiment as an impeder can be maintained.

Here, how many thin-plated ferromagnetic materials should be stacked in each ferromagnetic core 413 is not particularly regulated, as it depends on an operating environment or other factors in which the impedance sheet 41 of this embodiment is used. For example, thin-plated ferromagnetic materials each with a thickness of about sub-mm, made of soft ferrite, electromagnetic steel, amorphous alloy, or other materials as described above, are prepared, and the thin-plated ferromagnetic materials can be stacked until a stacking thickness is about 3 to 30 mm to make the ferromagnetic core 413 as described above.

Here, since soft ferrite exhibits high resistance even in mass or powder form, eddy currents are seldom generated even when the ferromagnetic core 413 with thin-plated soft ferrites stacked is exposed to a high-frequency magnetic field.

Although a surface of electromagnetic steel is insulated by an insulating material, a cross-section of the electromagnetic steel when cut is conductive. When the electromagnetic steel is used as the thin-plated ferromagnetic material, the electromagnetic steel is disposed and stacked so that the insulating materials located on the surface of the electromagnetic steel are adjacent to each other. For portions of the electromagnetic steel where the cross-section is exposed, insulating treatment is applied with insulating varnish or other insulating materials. This allows the ferromagnetic core 413 made of electromagnetic steel to be handled substantially as an insulator. However, since eddy currents are generated when magnetic flux enters a plane in a stacking direction, the ferromagnetic cores 413 are disposed so that the stacking direction is orthogonal to the surface normal direction of the sheet 411, as described above.

FIG. 2B is a view schematically illustrating an appearance where the impedance sheet 41 with the ferromagnetic cores 413 as illustrated in FIG. 2A is mounted on the mandrel 902 of the electric-resistance welded pipe manufacturing device.

As illustrated in FIG. 2B, when the impedance sheet 41 using the ferromagnetic cores 413 illustrated in FIG. 2A is mounted on the mandrel 902 of the electric-resistance welded pipe manufacturing device, the impedance sheet 41 is preferably disposed so that the stacking direction of the thin-plated ferromagnetic materials is along a circumferential direction of the mandrel 902 (at an installation position of each ferromagnetic core 413, a stacking direction of the thin-plated ferromagnetic materials is approximately parallel to a tangent of a circumference of the mandrel 902). By mounting the impedance sheet 41 on the mandrel 902 in this manner, the generation of eddy currents due to magnetic flux can be prevented even if the magnetic flux enters the ferromagnetic core 413, and the function of the impedance sheet 41 of this embodiment as an impeder can be maintained.

When a mass of a sintered body made of soft ferrite is used as the ferromagnetic material 412, the thickness and diameter of the sintered body should be, for example, about 3 to 30 mm. Since soft ferrite exhibits high resistance even in mass or powder form as described above, eddy currents are seldom generated even when the mass of the sintered body made of soft ferrite is exposed to a high-frequency magnetic field.

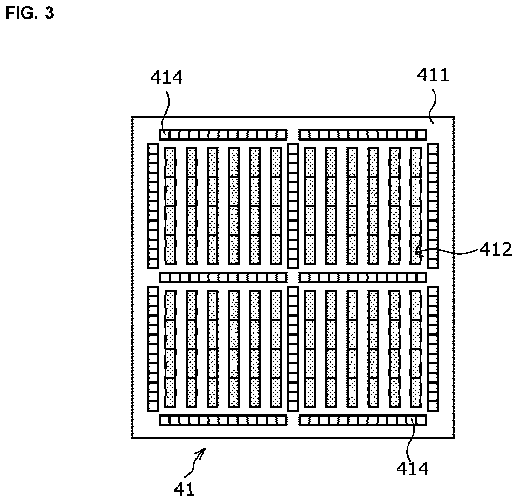

FIG. 3 is a plan view to explain an example of a plurality of impedance sheets 41 of this embodiment are coupled.

In FIG. 3, the code 41 is the impedance sheet, the code 411 is the sheet, the code 412 is the impeder, and the code 414 is the sheet coupling tool.

FIG. 3 illustrates an example of coupling four impedance sheets 41 (sheets 411) in FIG. 1 with removable sheet coupling tools 414, such as surface fasteners.

The impedance sheet 41 of this embodiment preferably has a structure that allows the impedance sheet 41 having the structure as illustrated in FIG. 1 to be coupled with each other, for example, as illustrated in FIG. 3, so that the impedance sheet 41 can cope with changes in a size of the mandrel 902 as illustrated in FIG. 1 and FIG. 3. This makes it possible to easily obtain a sheet-shaped impeder having a desired size by utilizing the plurality of impedance sheets 41. As a result, the impedance sheet 41 of this embodiment can be applied to any existing mandrel 902 of any size.

A preferred method of coupling the impedance sheets 41 of this embodiment to each other is to provide the sheet coupling tools 414 at four peripheral ends of the sheet 411 (that is, at the four end sides), as illustrated in FIG. 1. However, when one or more sheet coupling tools 414 are present in each impedance sheet 41, locations of the sheet coupling tools 414 are not limited to the four peripheral ends, but can be any location as needed.

A concrete structure of the sheet coupling tool 414 is not particularly regulated, and various known coupling structures and coupling members can be applied as appropriate. In this case, it is preferable that the sheet coupling tool 414 is made of an insulator having heat resistance and that it does not cause dielectric loss due to high-frequency current, like the sheet 411.

As the sheet coupling tool 414 of this embodiment, a method to have a structure can be adopted such that, for example, a recessed portion is formed at one end of the sheet 411 while a projecting portion is formed at the other end in each impedance sheet 41, and the projecting portion in one impedance sheet 41 is fitted into the recessed portion of the other impedance sheet 41.

### (Second Embodiment)

An impedance sheet of a second embodiment of the present invention is an impedance sheet that has a sheet that can be freely wound around an outer circumference of a mandrel of an electric-resistance welded pipe manufacturing device and bag-shaped holders that hold bar-shaped ferromagnetic materials that exhibit insulating properties, which is disposed on the sheet. Such an impedance sheet can be used in a method for manufacturing the electric-resistance welded pipe, in which, for example, a metal band plate of various types of steel, stainless steel, or other metals is bent into a cylindrical shape while running, and a tubular shape is achieved by welding.

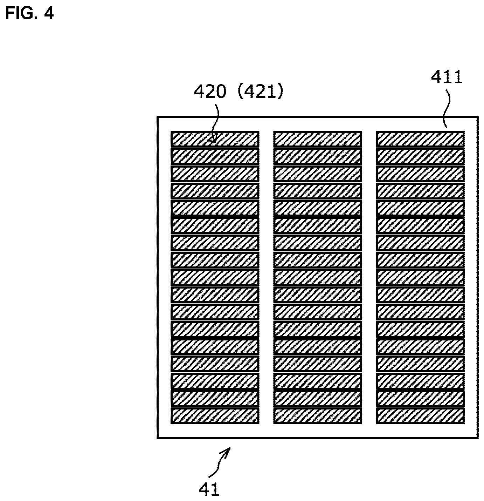

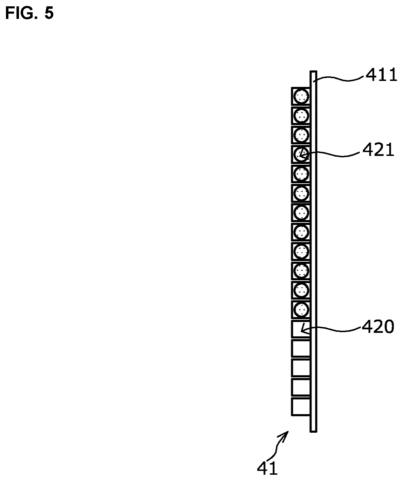

FIG. 4 is a plan view to explain the impedance sheet 41 of the second embodiment of the present invention. FIG. 5 is a side view to explain the impedance sheet 41 illustrated in FIG. 4.

In FIG. 4 and FIG. 5, the code 41 is the impedance sheet, the code 411 is the sheet, a code 420 is a holder, and a code 421 is a ferromagnetic material. The impedance sheet 41 for manufacturing the electric-resistance welded pipe of this embodiment is formed by the sheet 411 with the holders 420 at a predetermined density, and each bar-shaped ferromagnetic material 421 is inserted between the sheet 411 and the holder 420. In other words, the holder 420 is configured to be bag-shaped at a space with the sheet 411.

The sheet 411 in the impedance sheet 41 of this embodiment is the same as the sheet 411 in the first embodiment, so a detailed description is omitted below. Although illustration is omitted in FIG. 4, it is preferable that the sheet coupling tools 414 are provided at the four peripheral ends of the sheet 411, similar to the impedance sheet 41 of the first embodiment. This allows the plurality of impedance sheets 41 to be coupled with each other through the sheet coupling tools 414.

The ferromagnetic material 421 in the impedance sheet 41 of this embodiment is the same as the ferromagnetic material 412 of the first embodiment, except that its shape is bar-shaped, so a detailed description is omitted below.

The number of holders 420 and ferromagnetic materials 421 on the sheet 411 should be adjusted appropriately in this embodiment as well, depending on the diameter of the electric-resistance welded pipe to be manufactured or the diameter of the mandrel 902, to ensure the required cross-sectional area of the ferromagnetic materials.

Also in the impedance sheet 41 of this embodiment, the bar-shaped ferromagnetic materials 421 may be the ferromagnetic cores 413 as illustrated in FIG. 2A. In this case, such a ferromagnetic core 413 is inserted into the holder 420 described below so that a stacking direction of the thin-plated ferromagnetic materials is orthogonal to the surface normal direction of the sheet 411.

When the impedance sheet 41 with the ferromagnetic cores 413 is mounted on the mandrel 902 of the electric-resistance welded pipe manufacturing device, the impedance sheet 41 is preferably disposed so that the stacking direction of the thin-plated ferromagnetic materials is along the circumferential direction of the mandrel 902 (at the installation position of each ferromagnetic core 413, the stacking direction of the thin-plated ferromagnetic materials is almost parallel to the tangent of the circumference of the mandrel 902), as in the first embodiment.

The mass of the sintered body made of soft ferrite may also be used as the ferromagnetic material 421.

The holder 420 is preferably a cloth-like material that is durable and heat resistant and does not cause dielectric loss due to high-frequency current, similar to the sheet 411. For example, a sheet for preventing welding spatter is used as the holder 420.

The holder 420 may be provided, for example, by sewing it into the sheet 411 or by fixing it to the sheet 411 with a surface fastener or the like. In this case, the holder 420 is provided so that one end thereof is open, and it is configured such that the bar-shaped ferromagnetic material 421 can be inserted through the opening (not illustrated) of the holder 420.

Here, when the ferromagnetic cores 413 as illustrated in FIG. 2A are used as the bar-shaped ferromagnetic materials 421, a relationship between the stacking direction of the thin-plated ferromagnetic materials and the surface normal direction of the sheet 411 is preferably maintained both when each ferromagnetic core 413 is inserted into the holder 420 and when the impedance sheet 41 is used. For this reason, a shape may be devised, for example, by making the cross-sectional shape of the bar-shaped ferromagnetic materials 421 and holders 420 (the shape as illustrated in FIG. 5) anisotropic, so that the stacking direction is easily grasped by users of the impedance sheet 41.

As a method of fixing the ferromagnetic material 421 to the sheet 411, for example, after inserting the ferromagnetic material 421 into the holder 420, the opening of the holder 420 can be sealed. A method of sealing the opening of the holder 420 is arbitrary, but for example, it can be sealed with a surface fastener, or with a cover with a plastic button attached.

According to the impedance sheet 41 of this embodiment described above, the holder 420 is provided fixedly to the sheet 411, so that the ferromagnetic materials 421 can be held securely against the sheet 411, even in a high-temperature environment, for example.

### (Third Embodiment)

An impedance sheet of a third embodiment of the present invention is an impedance sheet that has a sheet that can be freely wound around an outer circumference of a mandrel of an electric-resistance welded pipe manufacturing device and bag-shaped holders that hold impeders in powder or granular form that exhibit insulating properties, which are disposed on the sheet. Such an impedance sheet can be used in a method for manufacturing the electric-resistance welded pipe, in which, for example, a metal band plate of various types of steel, stainless steel, or other metals is bent into a cylindrical shape while running, and a tubular shape is achieved by welding.

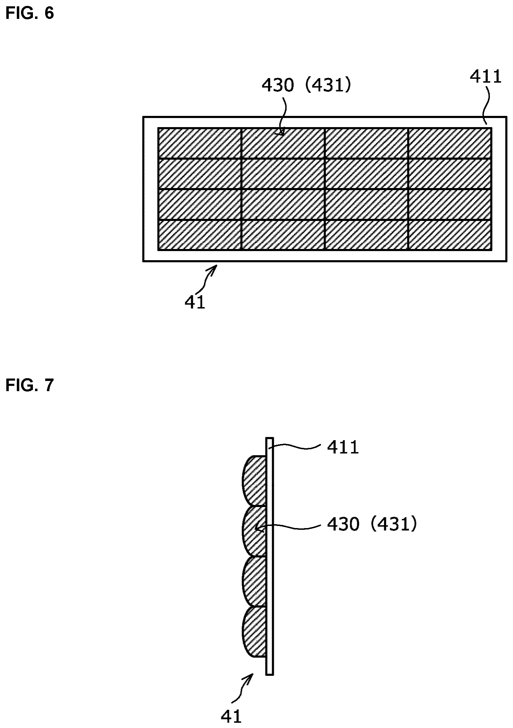

FIG. 6 is a plan view to explain the impedance sheet 41 of the third embodiment of the present invention. FIG. 7 is a side view to explain the impedance sheet 41 illustrated in FIG. 6.

In FIG. 6 and FIG. 7, the code 41 is the impedance sheet, the code 411 is the sheet, a code 430 is a holder, and a code 431 is a ferromagnetic material. The impedance sheet 41 for manufacturing the electric-resistance welded pipe of this embodiment is formed by the sheet 411 with the holder 430, and the ferromagnetic material 431 in powder or granular form is charged between the sheet 411 and the holder 430. In other words, the holder 430 is configured to be bag-shaped at a space with the sheet 411.

The sheet 411 in the impedance sheet 41 of this embodiment is the same as the sheet 411 of the first embodiment, so a detailed description is omitted below. Although illustration is omitted in FIG. 6, it is preferable that the sheet coupling tools 414 are provided at the four peripheral ends of the sheet 411, similar to the impedance sheet 41 of the first embodiment. This allows a plurality of impedance sheets 41 to be coupled with each other through the sheet coupling tools 414.

The ferromagnetic material 431 in the impedance sheet 41 of this embodiment can be made of the same material as the ferromagnetic material 412 of the first embodiment, except that the shape thereof is in powder or granular form, so a detailed description is omitted below.

The holder 430 is preferably a cloth-like material that is durable and heat resistant and does not cause dielectric loss due to high-frequency current, similar to the sheet 411. For example, a sheet for preventing welding spatter is used as the holder 430.

The holder 430 is provided, for example, by sewing the holder 430 with the ferromagnetic material 431 in powder or granular form charged into the sheet 411 in a quilted manner.

Locations of the holder 430 and ferromagnetic material 431 on the sheet 411 should be adjusted appropriately in this embodiment as well, depending on the diameter of the electric-resistance welded pipe to be manufactured or the diameter of the mandrel 902, to ensure the required cross-sectional area of the ferromagnetic material.

The impedance sheet 41 of this embodiment described above can enjoy the same effects as the second embodiment, and since the holder 430 is provided fixedly to the sheet 411, the ferromagnetic material 431 can be held securely against the sheet 411, even in a high-temperature environment, for example.

### (Fourth Embodiment)

A fourth embodiment of the present invention relates to a mandrel of an electric-resistance welded pipe manufacturing device in which the impedance sheet of the first embodiment is used as an inner circumferential current suppression device. In the following, a case where the impedance sheet of the first embodiment is used as the inner circumferential current suppression device will be taken as an example, but the impedance sheet of the second or third embodiment may be used instead of the impedance sheet of the first embodiment.

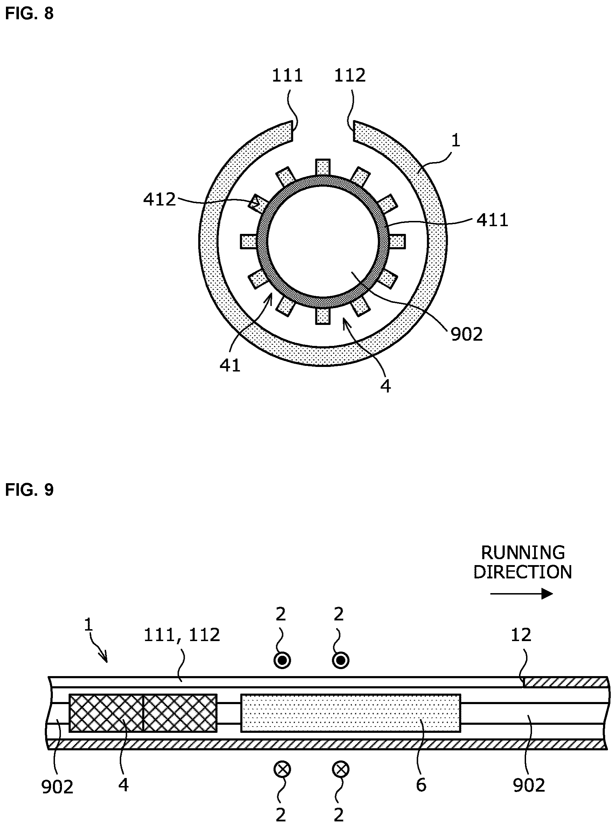

FIG. 8 is used to explain the mandrel 902 of the electric-resistance welded pipe manufacturing device when the impedance sheet 41 of the first embodiment is used as the inner circumferential current suppression device 4. FIG. 8 is a view to explain an example of the mandrel 902 of the electric-resistance welded pipe manufacturing device of this embodiment when the impedance sheet 41 for manufacturing the electric-resistance welded pipe of the first embodiment is used as the inner circumferential current suppression device 4.

In FIG. 8, the code 1 is the open pipe, the codes 111 and 112 are the open pipe opening end portions, the code 4 is the inner circumferential current suppression device, the code 41 is the impedance sheet, the code 411 is the sheet, the code 412 is the ferromagnetic material, and the code 902 is the mandrel of the electric-resistance welded pipe manufacturing device.

As illustrated in FIG. 8, by using one or more impedance sheets 41 of the first embodiment, the inner circumferential current suppression device 4 can be configured to cover one outer circumference of the mandrel 902 of the electric-resistance welded pipe manufacturing device.

The inner circumferential current suppression device 4 of this embodiment can be mounted on an outside of the mandrel 902 without being placed in an impeder case. Compared to conventionally used inner circumferential current suppression devices, the inner circumferential current suppression device 4 of this embodiment is more effective in suppressing current because it can be closer to an inner circumference of the cylindrically bent open pipe 1.

The effect of suppressing the inner circumferential current can be further enhanced by winding the impedance sheets 41 around the mandrel 902 in multiple layers to cover the outer circumference of the mandrel 902.

Furthermore, with the inner circumferential current suppression device 4 of this embodiment, the impedance sheet 41 only needs to be attached to the outside of the mandrel 902, and the above-mentioned effect of suppressing the inner circumferential current can be enjoyed with a simple configuration. An attaching position of the inner circumferential current suppression device 4 using the impedance sheet 41 can be set at any position on the mandrel 902, but it should be set in consideration of magnetic field intensity, molten metal dripping, or other factors. For example, it is preferable to attach it to a part located upstream of the induction coil 2.

Although the example illustrated in FIG. 8 illustrates the inner circumferential current suppression device 4 that covers one outer circumference of the mandrel 902, in this embodiment, the inner circumferential current suppression device 4 using one or more impedance sheets 41 is provided to cover at least half circumference or more of the mandrel 902 facing the open pipe opening end portions 111, 112 sides.

When the impedance sheet 41 of the second or third embodiment is used in the inner circumferential current suppression device 4 of this embodiment, it is preferable to attach it on a flat surface side of the sheet 411 (that is, a side without the ferromagnetic materials 421, 431) to the outer circumferential surface side of the mandrel 902. This allows the impedance sheet 41 to be properly attached to the mandrel 902.

Reasons why a water-cooled structure is not specifically provided in the inner circumferential current suppression device 4 of this embodiment are explained next.

In the manufacture of the electric-resistance welded pipes using an electric-resistance welded pipe manufacturing device 900 as illustrated in FIG. 14, the intensity of the magnetic field generated is higher directly below the induction coil 2. In the impeders 61 and impeder case 62, which make up the conventional inner circumferential current suppression device 6 as illustrated in FIG. 16, the conventional impeders 61 are considered to be cooled through cooling water in the impeder case 62 because heat generation of the impeders 61 made of soft ferrite or electromagnetic steel is inevitable due to the intensity of the magnetic field as described above.

However, when the inventors performed electromagnetic field analysis on the intensity of the magnetic field as described above, the following were found: the magnetic field intensity was strong directly below and near the induction coil 2; the magnetic field intensity weakened at a distance of about 50 mm to 100 mm upstream from the induction coil 2, and it was often that cooling of the impeders was not particularly necessary though depending on the electricity input.

Even in cases where there was concern about heat generation or about scale and other deposits falling through the opening of the open pipe 1, it was found that water can be injected through nozzles or other means into the opening of the open pipe 1, and a cooling structure dedicated to the impeder was not essential in the case of the inner circumferential current suppression device 4 of this embodiment.

Based on the above findings from the electromagnetic field analysis, it is preferable that the impedance sheet 41 of this embodiment be wound around the mandrel 902 so that it covers at least a part of the mandrel 902 that is located upstream of the induction coil 2 in a running direction.

### (Fifth Embodiment)

A fifth embodiment of the present invention relates to a method for manufacturing the electric-resistance welded pipe using the inner circumferential current suppression device 4 of the fourth embodiment. In the inner circumferential current suppression device 4 of this embodiment, the impedance sheet of the second or third embodiment may be used instead of the impedance sheet of the first embodiment.

The inner circumferential current suppression device 4 described in the fourth embodiment can be easily mounted on any position of the mandrel 902 with any length and thickness, without modification or new installation of the existing mandrel 902, conventional impeders 61, and impeder case 62. Therefore, such an inner circumferential current suppression device 4 can be used to increase the impeder capacity at a low cost.

### [Extension of existing inner circumferential current suppression device]

FIG. 9 is a view to explain an example where the inner circumferential current suppression device 4 of this embodiment is added upstream of the existing inner circumferential current suppression device 6 of the existing mandrel 902.

In FIG. 9, the code 1 is the open pipe, the codes 111 and 112 are the open pipe opening end portions, the code 12 is the joint portion, the code 2 is the induction coil, the code 4 is the inner circumferential current suppression device of this embodiment, a code 6 is a conventional inner circumferential current suppression device, and the code 902 is the mandrel.

As illustrated in FIG. 9, by newly adding the inner circumferential current suppression device 4 of this embodiment upstream of the existing conventional inner circumferential current suppression device 6, it is possible to manufacture the electric-resistance welded pipe while achieving the effect such that the existing conventional inner circumferential current suppression device 6 is substantially extended on an upstream side.

In such a case, the inner circumferential current suppression device 4 can suppress the inner circumferential current that tends to flow upstream of the induction coil 2 around the open pipe opening end portions 111, 112 of the open pipe 1.

### [Inner circumferential current suppression device with large cross-sectional area]

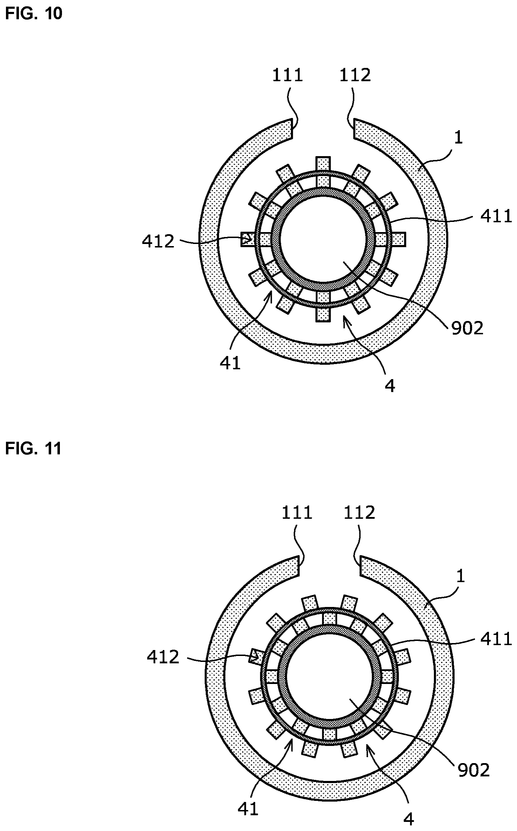

FIG. 10 and FIG. 11 are views to explain an example in which the inner circumferential current suppression devices 4 of this embodiment are superimposed in a radial direction of the mandrel 902 to form the impedance sheet 41 for manufacturing the electric-resistance welded pipe.

In FIG. 10 and FIG. 11, the code 1 is the open pipe, the codes 111 and 112 are the open pipe opening end portions, the code 4 is the inner circumferential current suppression device of this embodiment, the code 41 is the impedance sheet, the code 411 is the sheet, the code 412 is the ferroelectric material, and the code 902 is the mandrel.

In the example illustrated in FIG. 10, the ferromagnetic materials 412 are disposed in a straight line along the radial direction on the doubled impedance sheets 41.

In the example illustrated in FIG. 11, the ferromagnetic materials 412 are disposed alternately in the radial direction on the doubled impedance sheets 41.

As illustrated in FIG. 10 and FIG. 11, it is possible to increase the cross-sectional area of the portion corresponding to the inner circumferential current suppressing device 4 by providing the impedance sheets 41 of this embodiment doubled in the radial direction of the mandrel 902. In other words, a magnetic flux density of the ferromagnetic materials 412 can be reduced by increasing the cross-sectional area as a magnetic material in the inner circumferential current suppressing device 4 by increasing the number of ferromagnetic materials 412. As a result, stable welding can be achieved by manufacturing the electric-resistance welded pipe using such an inner circumferential current suppression device 4.

### [EXAMPLE]

In examples, the effects of the present invention were verified by static heating experiments.

### [Material to be heated]

In the examples, a steel pipe of 89 mm in outer diameter, 3 mm in wall thickness, and 1 m in length was used as a material to be heated simulating an open pipe, and a shape of an opening illustrated in FIG. 13 was simulated on an upper part of the steel pipe by laser processing. In this laser processing, a part of the steel pipe was removed from a left end in FIG. 13 so that a distance between parallel openings was 15 mm and a length was 400 mm, and a part of the steel pipe was removed at a length of 300 mm continuously from the removed part so that an angle between an apex, which simulated the joint portion 12 and both end portions of the pipe was 5.7 degrees to form the opening (a total length of the opening was 700 mm). The apex was 0.5R.

### [Electric-resistance welded pipe manufacturing device]

In the electric-resistance welded pipe manufacturing device used in the examples, an induction coil made of ϕ10 mm water-cooled copper pipe (inner diameter of 110 mm, 2 turns, width of 50 mm) was used as the induction coil. The induction coil was disposed so that a distance between the copper pipe and the steel pipe was 10 mm and 150 mm away from the apex of the opening, which simulated the joint portion.

During heating, electricity was applied at a frequency of 180 kHz to 20 kW, and the time it took for a maximum temperature to reach 800°C with static heating was measured.

Heating temperatures were measured by welding 50-µm K thermocouples at a pitch of 20 mm from the apex of the opening, which simulated the joint portion, to an end of the steel pipe.

In each of the following experiments, heating rates of the joint portion were compared.

In each experiment, squeeze rolls were not provided.

### [Example 1]

### <Impedance sheet>

An impedance sheet was produced with a soft ferrite core of 5 mm in thickness, 10 mm in width, and 130 mm in length, fixed to a silicone rubber sheet of 170 mm in width, 140 mm in length, and 2 mm in thickness with adhesive at a pitch of 5 mm.

### <Manufacturing Electric-resistance welded pipe>

A surface fastener was fixed to an end of the rubber sheet with adhesive at a width of 5 mm. The impedance sheet was wound around an outer circumference of a polycarbonate pipe, which simulated a mandrel, from a position 100 mm upstream of the induction coil, and heating was performed.

### [Example 2]

### <Impedance sheet>

The impedance sheet of Example 1 was used.

### <Manufacturing Electric-resistance welded pipe>

As illustrated in FIG. 9, a first inner circumferential current suppression device was configured first, and then a second inner circumferential current suppression device was installed on an upstream side closely to the end of the first inner circumferential current suppression device to be extended, and heating was performed.

### [Example 3]

### <Impedance sheet>

The impedance sheet of Example 1 was used.

### <Manufacturing Electric-resistance welded pipe>

As illustrated in FIG. 10, two layers of impedance sheets were used to form the inner circumferential current suppression device, and heating was performed.

### [Comparative Example 1]

### <Manufacturing Electric-resistance welded pipe>

As a comparative example, heating was performed without the use of the impedance sheet according to the present invention.

A cylindrical soft ferrite core (outer diameter of 35 mm, inner diameter of 15 mm, length of 250 mm) illustrated in FIG. 16 was fixed so that it was at a center of a diameter of a polycarbonate pipe with an outer diameter of 50 mm and a thickness of 3 mm, which allowed water cooling of the inner and outer circumferences of the soft ferrite core. The soft ferrite core was installed so that a tip was 50 mm upstream of the joint portion and a tail end was 100 mm upstream of the induction coil.

A polycarbonate pipe, which simulated a mandrel, was installed in a center of the pipe, with impeders, for an entire length of the pipe.

### [Results]

Results of Examples 1 to 3 and Comparative Example 1 above are shown in Table 1 below.

A ratio of heating rate is a value obtained by dividing the heating rate of the comparative example by the heating rate at which the temperature at the apex of the opening, which simulates the joint portion, reaches 800°C.

Table 1 shows that the addition of the impedance sheet or the impeder of the present invention improved the heating rate by 6% (Example 1), furthermore, doubling the length improved it by 13% (Example 2), and doubling the thickness of the impeder improved it by 27% (Example 3), and it was confirmed that the effect of the present invention is significant.

In addition, in the experiments, the impeders of the present invention could be used stably without any particular heat generation.

### [Table 1]

**TABLE 1**

| | RATIO OF HEATING RATE |
|---|---|
| EXAMPLE 1 | 1.06 |
| EXAMPLE 2 | 1.13 |
| EXAMPLE 3 | 1.27 |
| COMPARATIVE EXAMPLE 1 | 1.00 |

### [Example 4, Comparative Example 2]

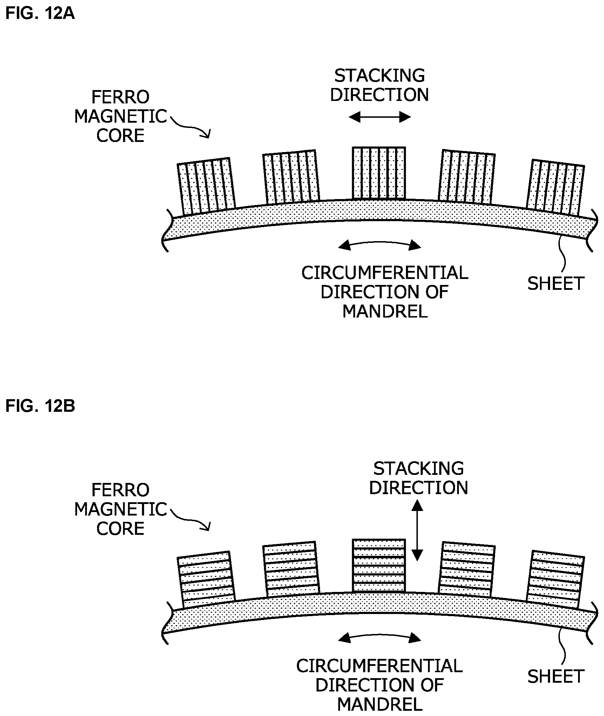

To examine a difference in core stability due to a difference in stacking directions in ferromagnetic cores formed by stacking the thin-plated ferromagnetic materials, electromagnetic steel sheets each with a thickness of 30 µm were stacked to be integrated to form a ferromagnetic core with a length of 100 mm and a square cross-section of 10 mm on a side. Three such ferromagnetic cores were placed next to each other in a longitudinal direction of a steel pipe to be 300 mm, and a case when disposing so that the stacking direction is orthogonal to a surface normal direction of the sheet, as illustrated in FIG. 12A (Example 4), and a case when disposing so that the stacking direction is parallel to the surface normal direction of the sheet, as illustrated in FIG. 12B (Comparison Example 2) were compared.

The experiment was conducted during the manufacturing of a steel pipe with an outer diameter of 216.3 mm and a wall thickness of 4.5 mm. A sheet was wound on a mandrel for one circumference at 50 mm upstream of an induction coil so that a distance between the ferromagnetic core and an inner surface of the steel pipe was 13 mm, and welding was performed. A welding frequency was 250 kHz. The results obtained are shown in Table 2 below.

### [Table 2]

**TABLE 2**

| | EXPERIMENTAL RESULTS |
|---|---|
| EXAMPLE 4 | ELECTRICITY COULD BE PASSED STABLY FOR A LONG TIME WITHOUT DEFORMATION THOUGH WITH SLIGHT WARMING. |
| COMPARATIVE EXAMPLE 2 | IMMEDDIATELY AFTER PASSING ELECTRICITY, HEAT GENERATION AND DEFORMATION OCCURRED AT CORE NEAR INDUCTION COIL, AND SHEET SCORCHED, SO EXPERIMENT WAS INTERRUPTED. |

### [Results]

As shown in Table 2 above, Example 4 could be used stably with only slight warming even after prolonged use. On the other hand, in Comparative Example 2, immediately after passing electricity through the induction coil, heat was generated and deformation occurred from a tip of the ferromagnetic core directly below the steel pipe opening on the side near the induction coil, causing partial melting damage and scorch marks on a silicon rubber of a sheet material, which forced the electricity supply to the induction coil to be stopped immediately. A penetration depth of the electromagnetic steel sheet at the frequency of this experiment was about 25 µm. In the case of Example 4, eddy currents were unlikely to be generated and heat was unlikely to be generated, whereas in Comparative Example 2, it was considered that eddy currents were easily generated and resulted in heat generation because the magnetic flux entered a surface of the electromagnetic steel sheet.

While preferred embodiments of the present invention have been described in detail with reference to the attached drawings, the present invention is not limited to such examples. It is clear that a person having ordinary knowledge in the technical field to which the present invention belongs can conceive of various changed examples and modified examples within the scope of the technical idea described in the claims, and it is understood that these also naturally belong to the technical scope of the present invention.

The embodiments disclosed herein are in all respects illustrative and not restrictive. The above embodiments may be omitted, substituted, or modified in various forms without departing from the scope of the appended claims, the configurations within the technical scope of the invention as described below, and the main purpose thereof. For example, the components of the above embodiments may be arbitrarily combined to the extent that the effects thereof are not impaired. In addition, from such arbitrary combination, the action and effect for each of the components for the combination will naturally be obtained, as well as other actions and other effects that are obvious to those skilled in the art from the description herein.

The effects described herein are only illustrative or exemplary, and not restrictive. In other words, the technology according to the present invention can produce other effects that are obvious to those skilled in the art from the description herein, either together with or in place of the above effects.

### [Industrial Applicability]

The present invention can be used for manufacturing electric-resistance welded pipes.

### [Explanation of Codes]

- 1: open pipe
- 11: open pipe opening
- 111: open pipe opening end portion
- 112: open pipe opening end portion
- 12: joint portion
- 2: induction coil
- 3: induced current
- 31: downstream-side induced current
- 32: downstream-side induced current
- 33: upstream-side induced current
- 34: upstream-side induced current
- 4: inner circumferential current suppression device
- 41: impedance sheet
- 411: sheet
- 412: ferromagnetic material
- 413: ferromagnetic core
- 414: sheet coupling tool
- 420: holder
- 421: ferromagnetic material
- 430: holder
- 431: ferromagnetic material
- 6: conventional inner circumferential current suppression device
- 61: impeder
- 62: impeder case
- 900: electric-resistance welded pipe manufacturing device
- 901: squeeze roll
- 902: mandrel

## Claims

1. An impedance sheet, comprising:
a sheet that can be freely wound around an outer circumference of a mandrel of an electric-resistance welded pipe manufacturing device; and
a plurality of ferromagnetic materials that exhibit insulating properties disposed on the sheet.

2. The impedance sheet according to claim 1, wherein
the sheet is made of an insulator having heat resistance and does not cause dielectric loss due to high-frequency current.

3. The impedance sheet according to claim 1, wherein
a surface of the sheet is provided with a bag-shaped holder that can house the ferromagnetic material in bar shape or powder form, and
the ferromagnetic material is provided in the bag-shaped holder.

4. The impedance sheet according to any one of claims 1 to 3, wherein
a ferromagnetic core formed by plate-shaped ferromagnetic materials stacked and integrated together is used as the plurality of ferromagnetic materials, and
the ferromagnetic core is disposed on the sheet so that a stacking direction of the plate-shaped ferromagnetic materials is orthogonal to a surface normal direction of the sheet.

5. The impedance sheet according to any one of claims 1 to 3, wherein
sintered bodies of magnetic materials that exhibit ferromagnetism are used as the plurality of ferromagnetic materials.

6. The impedance sheet according to any one of claims 1 to 5, wherein
the sheet has coupling tools at an end of the sheet and a plurality of the sheets can be coupled with each other.

7. A mandrel of an electric-resistance welded pipe manufacturing device, comprising:
the impedance sheet according to any one of claims 1 to 6 wound around to cover at least half or more of an outer circumference of the mandrel of the electric-resistance welded pipe manufacturing device.

8. A method for manufacturing an electric-resistance welded pipe, which is a method using an electric-resistance welded pipe manufacturing device made up of an induction coil, squeeze rolls, and a mandrel, to perform electric-resistance welding of a metal band plate that is bent into a cylindrical shape while being conveyed in a predetermined running direction, the method comprising:
winding the impedance sheet according to any one of claims 1 to 6 around to cover at least half or more of an outer circumference of the mandrel.

9. The method for manufacturing the electric-resistance welded pipe according to claim 8, wherein
the impedance sheet is wound around to cover at least a portion of the mandrel that is located upstream of the induction coil in the running direction.
